# EUROPÄISCHE PATENTANMELDUNG

(11) **EP 0 950 571 A2**
(43) Veröffentlichungstag der Anmeldung: **20.10.1999**
(21) Anmeldenummer: 99106401.5
(22) Anmeldetag: 27.03.1999
(51) Int. Cl.: B60R 11/02

(54) **Einbauvorrichtung für Fahrzeuge**

(30) Priorität: 18.04.1998 DE 19817302
(71) Anmelder: Johnson Controls Interiors GmbH, 42285 Wuppertal (DE)
(72) Erfinder: Mieglitz, Hans-Helmut, 40789 Monheim (DE); Roughton, Charles, 47638 Straelen (DE); Schidan, Alexander, 42719 Solingen (DE)
(74) Vertreter: Patentanwälte Dr. Solf & Zapf

(57) **Zusammenfassung**

Beschrieben wird eine Einbauvorrichtung für Fahrzeuge, insbesondere zur lösbaren Halterung eines Handtelefons (Handy). Die Einbauvorrichtung ist ausgebildet mit einem in einem Aufnahmeschacht eines Fahrzeugteils (1), wie Armaturentafel, Konsole oder dgl. anzuordnenden, nach vorne offenen Gehäuse (2), einem über eine im wesentlichen vertikal ausgerichtete Drehachse (5) in das Gehäuse (2) einschwenkbaren und aus dem Gehäuse (2) herausschwenkbaren Tragteil (16), einer am Tragteil (16) angeordneten Auflageplatte (7) für das Handy (12) bei aus dem Gehäuse (2) herausgeschwenktem Tragteil (16) und einer im wesentlichen horizontal ausgerichteten Schwenkachse (11) zwischen dem Tragteil (16) und der Auflageplatte (7).

## Beschreibung

Die Erfindung bezieht sich auf eine Einbauvorrichtung für Fahrzeuge, insbesondere zur lösbaren Halterung eines Handtelefons (Handy).

Bei einer durch die DE 195 39 784 C2 bekanntgewordenen Einbauvorrichtung, insbesondere zur lösbaren Halterung eines Handtelefons, ist ein nach vorne offenes Gehäuse mit einem darin längsbeweglich geführten Aufnahmefach für ein von diesem klemmend gehaltenes Handtelefon vorgesehen, wobei das Aufnahmefach aus zwei in axialer Richtung hintereinander angeordneten Fachteilen unterschiedlicher Länge besteht, von denen das längere zur passenden Aufnahme des Handtelefons dient, völlig aus dem Gehäuse herausziehbar und mit dem kürzeren, ständig im Gehäuse verbleibenden Fachteil über ein Scharnier verbunden und senkrecht zur Schieberrichtung verschwenkbar ist

Der Erfindung liegt die Aufgabe zugrunde, eine demgegenüber vereinfachte und wesentlich kleiner dimensinoierte Einbauvorrichtung zur Verfügung zu stellen.

Die zur Lösung dieser Aufgabe erfindungsgemäß vorgesehene Einbauvorrichtung weist die Merkmale des Anspruchs 1 auf, während in den Unteransprüchen vorteilhafte Ausgestaltungen und Weiterbildungen der Erfindung gekennzeichnet sind.

Die erfindungsgemäßen Maßnahmen ermöglichen es, ein Handy in Bedienerlage zu positionieren um einen schnellen Zugriff zum Telefon zu gewährleisten, einen gut geeigneten, zentralen Lagerplatz zu schaffen, das Handy-Display sowie die Tastatur in Beobachterposition zu bringen, ein Freisprechen durch die Nähe der Halterposition zu begünstigen, ein Verrutschen des Handys während der Fahrt zu vermeiden, ein Vergessen des Handys beim Aussteigen aus dem Fahrzeug zu erschweren und generell das Telefonieren im Auto, wenn schon nicht ganz vermeidbar, durch Gestaltung des Umfelds unter Entlastung des Handlingsaufwands durch den Fahrer sicherer zu machen.

Ein Ausführungsbeispiel der Erfindung wird nachfolgend anhand der Zeichnungen naher erläutert, und es zeigen:
- Fig. 1: einen Cockpitausschnitt mit Einbauvorrichtung,
- Fig. 2: eine Draufsicht auf die Einbauvorrichtung in der Nichtgebrauchslage,
- Fig. 3: eine Draufsicht auf die Einbauvorrichtung in der Gebrauchslage,
- Fig. 4: einen Schnitt I-I nach Fig. 3 und
- Fig. 5: die mit einem Handy bestückte Einbauvorrichtung in der Gebrauchslage.

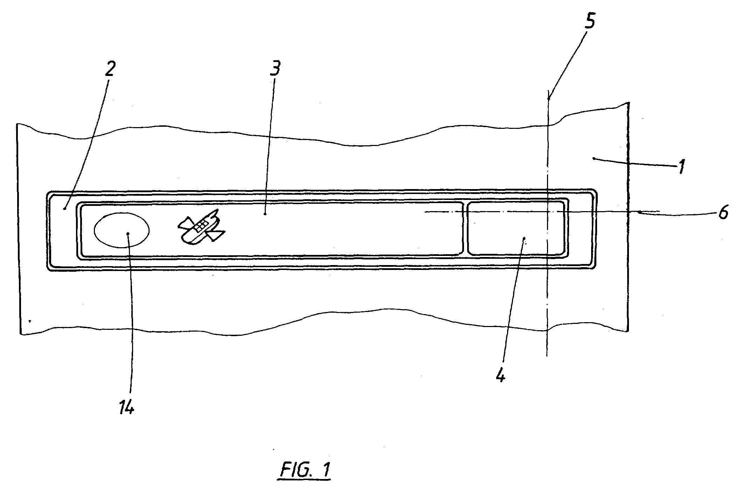

Die Darstellung nach Fig. 1 läßt ein Fahrzeugteil 1, bei dem es sich um einen Cockpit-, einen Mittelkonsolenhais oder dgl. handeln kann, mit einer in einem Aufnahmeschacht derselben angeordneten Einbaueinheit erkennen. Von der Einbaueinheit sichtbar sind der Rahmen eines Gehäuses 2 sowie die in zwei Blenden 3, 4 unterteilte Front.

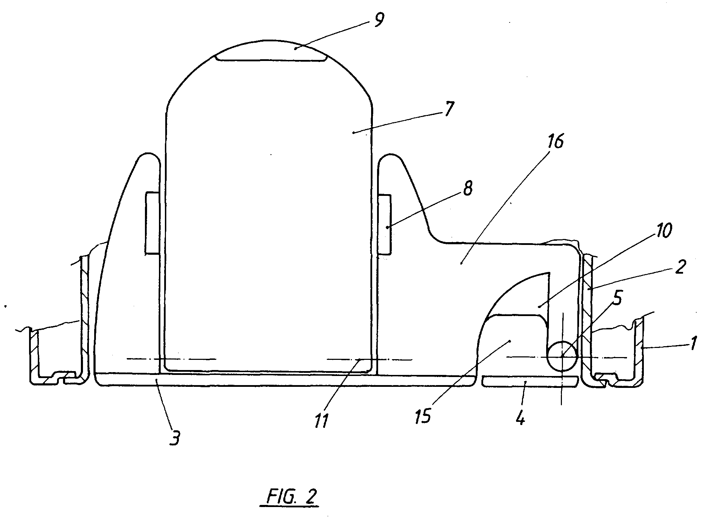

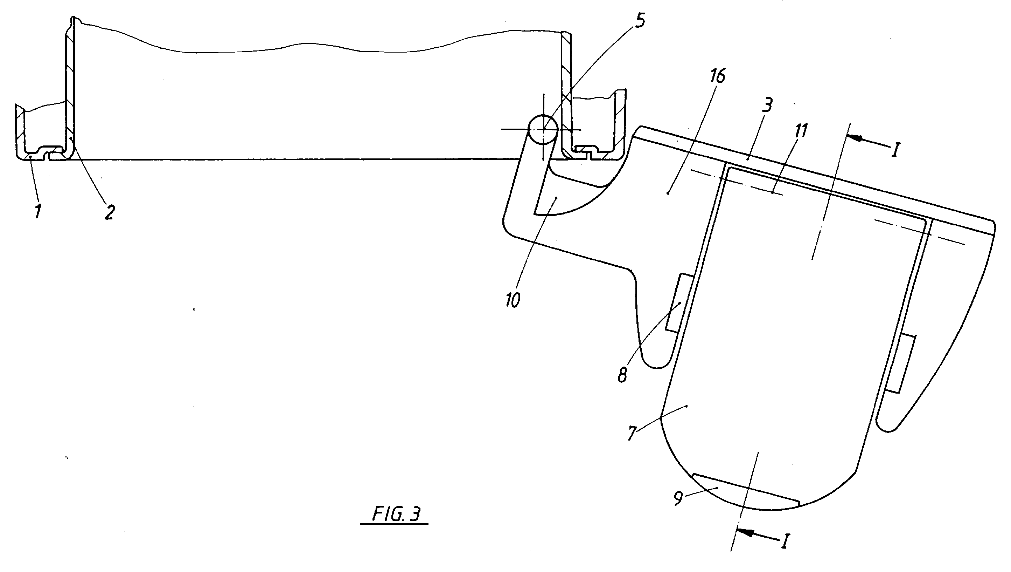

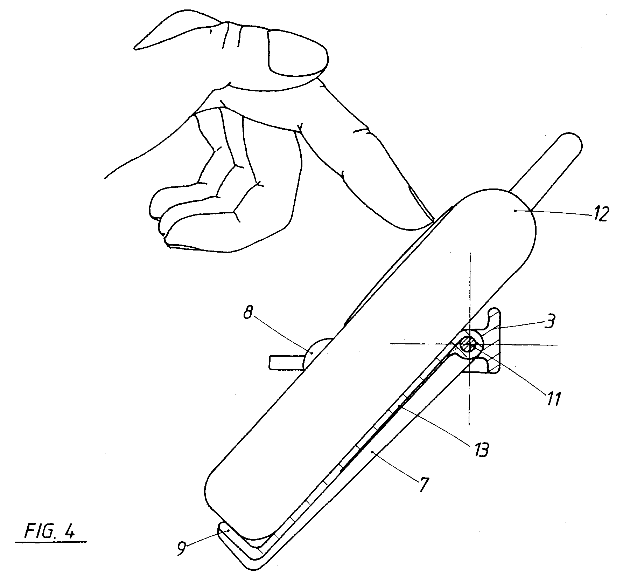

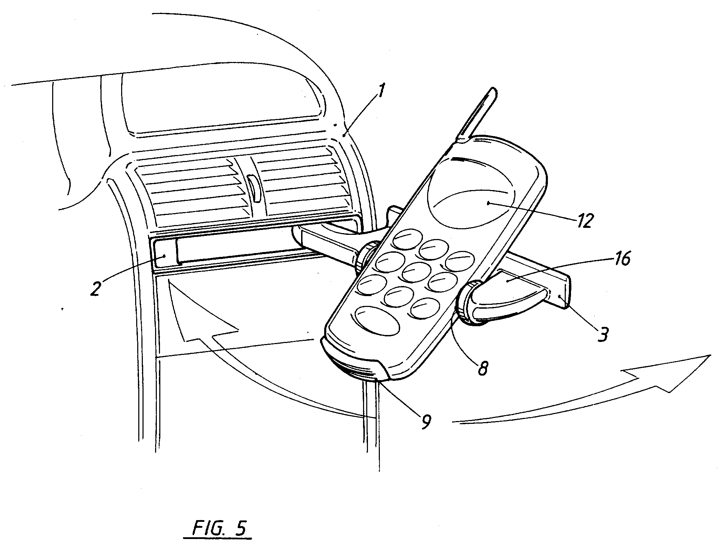

Die Einbauvorrichtung umfaßt das Gehäuse 2 und ein Tragteil 16, welches über eine im wesentlichen vertikal ausgerichtete Drehachse 5 in das Gehäuse 2 einschwenkbar ist (Fig. 1 und 2) und aus dem Gehäuse 2 herausschwenkbar ist (Fig. 3 - 5). Am Tragteil 16 ist eine Auflageplatte 7 angeordnet, auf die ein Handy 12 abgelegt werden kann, wenn sich die Auflageplatte 7 in der aus dem Gehäuse 2 herausgeschwenkten Position befindet. Die Auflageplatte 7 ist am Tragteil 16 angelenkt, und zwar über eine im wesentlichen horizontal ausgerichtete Schwenkachse 11. Die abgeschwenkte Schräglage der Auflageplatte 7 ist in Fig. 4 und 5 gezeigt und beträgt etwa 45 Winkelgrade, was sich für die Positionierung des Handys 12 als optimal erwiesen hat. Die Schräglage wird durch das Auflegen bzw. durch das Gewicht des Handys 12 bewirkt, und zwar gegen die Kraft einer Rückstellfeder 13, die bemüht ist, die Auflageplatte 7 in eine, eine Rückführung des Tragteils 16 in das Gehäuse 2 ermöglichende Horizontallage zu überführen.

Am freien Ende der Auflageplatte 7, die wesentlich kürzer ist als die Länge eines handelsüblichen Handys 12, befindet sich ein Anschlag 9 zum Abstützen des Handys 12. Zur seitlichen Abstützung des Handys 12 dienen Puffer 8, die links und rechts neben der Auflageplatte 7 am Tragteil 16 angeordnet sind.

Zum Verschließen der Gehäuseöffnung in der Nichtgebrauchslage der Einbauvorrichtung dienen die bereits erwähnten Blenden 3 und 4. Dabei ist die Blende 3 starr mit dem Tragteil 16 verbunden z. B. dadurch, daß das Tragteil 16 mit der Blende 3 als einstückiges Kunststoff-Spritzgußteil ausgebildet ist. Die Blende 4 ist hingegen ein separates Bauteil, welches über eine Drehachse 6 mit dem Gehäuse 2 verbunden ist. Die Drehachse 6 ist dem oberen Randbereich der Blende 4 benachbart, so daß die Blende zufolge ihres Eigengewichts bestrebt ist, ihre abdeckende Position einzunehmen. Zum Öffnen der Blende 4 dient eine am Tragteil 16 angeordnete Anlaufschräge 10, die beim Aufschwenken des Tragteils 16 durch den Freiraum 15 und dann gegen die Rückseite der Blende 4 fährt.

Die Drehachse 5 ist in einem vorderen Eckbereich des Gehäuses 2 positioniert, so daß sich für das Tragteil 16 ein relativ großer Schwenkbereich ergibt. Die Schwenkachse 11 ist der Blende 3 benachbart am Tragteil 16 angeordnet.

Die Einbauvorrichtung kann zwecks Steigerung des Bedienungskomforts mit einer an sich bekannten Öffnungsautomatik (Tip-Matic-Verriegelung) ausgestattet sein. Beim Einsatz einer solchen Automatik kommt eine in Fig. 1 mit 14 gekennzeichnete Druckpunktanzeige zum tragen.

## Patentansprüche

1. Einbauvorrichtung für Fahrzeuge, insbesondere zur lösbaren Halterung eines Handtelefons (Handy 12), mit
- einem in einem Aufnahmeschacht eines Fahrzeugteils (1), wie Armaturentafel, Konsole oder dgl. anzuordnenden, nach vorne offenen Gehäuse (2),
- einem über eine im wesentlichen vertikal ausgerichtete Drehachse (5) in das Gehäuse (2) einschwenkbaren und aus dem Gehäuse (2) herausschwenkbaren Tragteil (16),
- einer am Tragteil (16) angeordneten Auflageplatte (7) für das Handy (12) bei aus dem Gehäuse (2) herausgeschwenktem Tragteil (16) und
- einer im wesentlichen horizontal ausgerichteten Schwenkachse (11) zwischen dem Tragteil (16) und der Auflageplatte (7).

2. Einbauvorrichtung nach Anspruch 1, dadurch gekennzeichnet, daß die im wesentlichen vertikal ausgerichtete Drehachse (5) in einem vorderen Eckbereich des Gehäuses (2) angeordnet ist.

3. Einbauvorrichtung nach Anspruch 1 oder 2, dadurch gekennzeichnet, daß die Auflageplatte (7) gegen die Kraft einer Rückstellfeder (13) in eine Schräglage bewegbar ist.

4. Einbauvorrichtung nach wenigstens einem der Ansprüche 1 bis 3, dadurch gekennzeichnet, daß die Länge der Auflageplatte (7) wesentlich kürzer ist als die Läge eines handelsüblichen Handys (12).

5. Einbauvorrichtung nach wenigstens einem der Ansprüche 1 bis 4, dadurch gekennzeichnet, daß die Auflageplatte (7) an ihrem freien Ende einen Anschlag (9) zum Abstützen eines Handys (12) aufweist.

6. Einbauvorrichtung nach wenigstens einem der Ansprüche 1 bis 5, dadurch gekennzeichnet, daß am Tragteil (16) Puffer (8) zur seitlichen Abstützung eines Handys (12) angeordnet sind.

7. Einbauvorrichtung nach wenigstens einem der Ansprüche 1 bis 6, dadurch gekennzeichnet, daß die Gehäuseöffnung bei eingeschwenktem Tragteil (16) durch eine erste, starr mit dem Tragteil (16) ausgebildete Blende (3) und durch eine zweite im Bereich der vertikalen Drehachse (5) am Gehäuse (2) über eine etwa horizontal ausgerichtete Drehachse (6) angelenkte Blende (4) verschlossen ist.

8. Einbauvorrichtung nach Anspruch 7, dadurch gekennzeichnet, daß die zweite am Gehäuse (2) angelenkte Blende (4) wesentlich kürzer ist als die erste Blende (3) und durch eine am Tragteil (16) angeordnete Anlaufschräge (10) aufschwenkbar ist.
